# EUROPEAN PATENT APPLICATION

(11) **EP 2 933 051 A1**
(43) Date of publication of application: **21.10.2015**
(21) Application number: 14425044.6
(22) Date of filing: 16.04.2014
(51) Int. Cl.: B23K 26/00, B29C 59/02, B29C 59/16

(54) **Method for embossing polymeric sheets having surface roughness**

(71) Applicant: Ondaplast S.p.a., 47020 Longiano FC (IT)
(72) Inventor: Boghi, Claudio, 47020 Longiano FC (IT); Rossi, Renzo, 47822 Santarcangelo DI Romagna FC (IT); Paolucci, Fabrizio, 47043 Gatteo FC (IT)
(74) Representative: Modiano, Micaela Nadia

(57) **Abstract**

A method for processing polymeric sheets, preferably with a polyolefin matrix, which provides, in a step a., for the deformation of at least one surface portion of at least one face of at least one polymeric sheet in order to increase the surface roughness of the face.

## Description

The present invention relates to a method for processing polymeric sheets, and to the associated polymeric sheets.

Currently, the use of polymeric sheets (with a polyolefin matrix) that are compact or multiwall (i.e., crossed internally by hollow channels) is increasingly widespread; these sheets are used in several fields of application (food industry, glass-making industry, paper-making industry, building industry, pharmaceutical industry, and others).

These sheets can in fact be used for logistical purposes, for packaging, for protection and covering, et cetera, optionally as a replacement for more traditional materials (such as paper or cardboard), which are now inadequate for the increasingly stringent requirements of the reference markets.

According to known methods, at the end of the process that leads to the provision of the sheets (usually by extrusion), they are stacked together, thus containing the overall space occupation and facilitating storage and subsequent transport toward the end customer and/or the place of use.

Upon use, therefore, it is necessary to pick up individually the sheet located at the top of the stack.

Typically, this activity is performed by resorting to automatic machines preset for this purpose, which lift the individual sheet, thus separating it from the remaining stack, assigning it to the desired use.

However, this constructive solution is not devoid of drawbacks.

Indeed, the flat shape of the sheets sometimes causes one of them to adhere to the underlying one (due to a sort of suction effect or due to an electrostatic effect) to the point that the subsequent individual pickup becomes problematic.

In greater detail, sometimes during the attempt to pick up the individual sheet, said sheet does not separate from the one that lies below it (due to the reasons described above), which is thus also lifted and moved, causing inconvenient drawbacks, such as for example the jamming of the automatic machine and the consequent and unpleasant halting of the line, which requires the intervention of the operator to restore the normal operating conditions.

The aim of the present invention is to solve the problems described above, by proposing a method that allows to obtain polymeric sheets for which the danger of mutual adhesion is contained or avoided.

Within this aim, an object of the invention is to provide polymeric sheets for which the danger of mutual adhesion is contained or avoided.

Another object of the invention is to propose a method that allows to obtain sheets that can be picked up individually, effectively and without the risk of drawbacks or machine downtimes during said pickup.

Another object of the invention is to propose sheets that can be picked up individually, effectively and without the risk of drawbacks or machine downtimes during said pickup.

Another object of the invention is to provide a sheet that ensures high reliability in operation.

Another object of the invention is to propose a method that can be performed easily starting from commonly commercially available elements and materials.

Another object of the invention is to provide a sheet that has low costs and is safe in application.

This aim, as well as these and other objects that will become better apparent hereinafter, are achieved by a method for processing polymeric sheets, preferably with a polyolefin matrix, characterized in that it provides, in a step a., for the deformation of at least one surface portion of at least one face of at least one polymeric sheet in order to increase the surface roughness of the face.

This aim and these objects are also achieved by a polymeric sheet, preferably with a polyolefin matrix, characterized in that it comprises at least one surface portion that is deformed artificially, to increase the surface roughness of at least one face, provided with said portion.

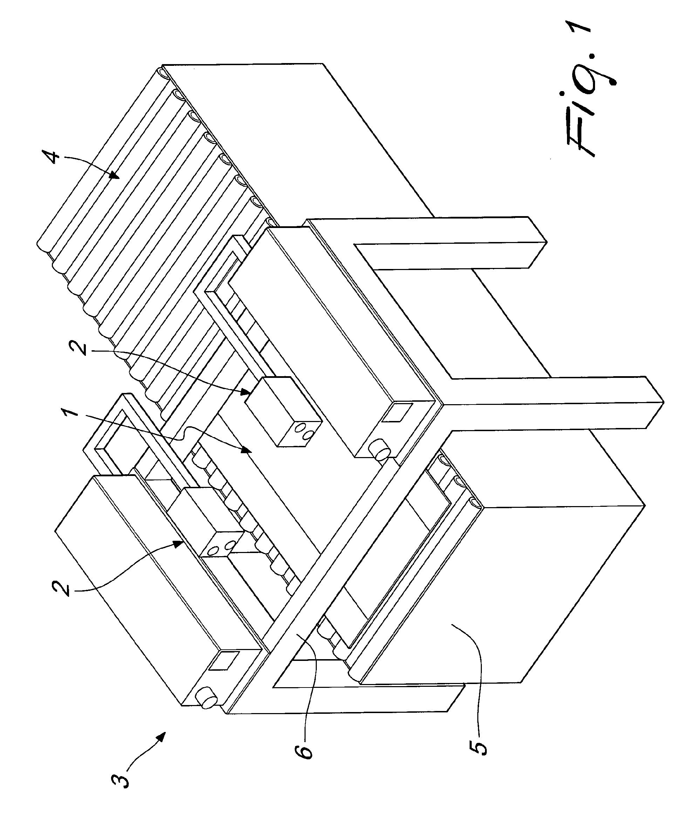

Further characteristics and advantages of the invention will become better apparent from the description of two preferred but not exclusive embodiments of the method and of the sheet according to the invention, with the first embodiment of the method according to the invention shown schematically in the accompanying Figure 1.

The present description relates to a method that provides for the processing of polymeric sheets 1, which can be used in several fields of application (food industry, glass-making industry, paper-making industry, building industry, pharmaceutical industry, and others) for logistical purposes, for packaging, for protection and covering, et cetera, applications in which it is possible to rely on the advantages and particularities described in the pages that follow.

It is furthermore specified from the outset that the polymeric sheets 1, toward which the method according to the invention can be aimed and which are in turn directly the subject matter of the protection claimed herein (as will become apparent), preferably have a polyolefin matrix, containing at least one polymeric material selected between polypropylene and polyethylene (or both, in percentages that can vary at will) and are obtained usually but not exclusively by extrusion. Moreover, said polymeric sheets 1 can be both of the compact type and of the multiwall type (i.e., crossed internally by hollow channels) depending on the specific requirements of application.

In any case, the possibility is not excluded to adopt the method according to the invention for the processing of polymeric sheets 1 of another type and/or having other component elements.

According to the invention, the method provides, in a step a., for deforming at least one surface portion of at least one face (or optionally both faces) of at least one polymeric sheet 1. The presence of at least one deformed surface portion thus produces, for the face provided with said portion, an increase in surface roughness.

In particular, step a. entails providing, at the surface portion to be deformed, at least one surface hollow, such as a groove, a cavity, a recess, and the like.

In this manner, when the superficially deformed sheet 1 is stacked on another sheet 1 that is the subject of method (or on a sheet of the traditional type) at the face on which the hollow has been provided (thus constituting the deformed surface portion), the presence of said hollow reduces and/or eliminates the danger of any mutual adhesion, as instead occurs sometimes when sheets of the known type are stacked on each other, in practice achieving from the outset the intended aim.

In an embodiment that is of considerable practical interest and does not limit the application of the invention, the method entails repeating step a., varying at each iteration the corresponding deformed surface portion, so as to achieve the optimum increase and control of the surface roughness of the at least one face affected by the deformation (or of both faces).

Even more particularly, in this embodiment of considerable practical interest, the method according to the invention entails providing, in each iteration of step a. and at each respective surface portion to be deformed, a corresponding surface hollow, such as a groove, a cavity, a recess, and the like.

In this manner, it is possible to provide on the face of interest (or on both, if one wishes) a plurality of surface hollows having a predefined depth.

The surface roughness thus given to the face of the sheet 1 (or to both faces) allows practical stacking thereof without the risk of machine downtimes or jamming due to the adhesion of adjacent sheets 1 and to the consequent difficulties in individual pickup.

In fact, the provision of a plurality of surface hollows indeed prevents mutual adhesion, limiting or eliminating the suction effect and/or the electrostatic effect, and therefore each sheet 1, treated according to the method according to the invention, can be moved individually without any problem.

In a first practical embodiment of the method according to the invention, cited by way of nonlimiting example, step a. consists in striking the desired face of the polymeric sheet 1 (or both faces) with a laser beam, so as to cause the localized melting of the surface portion to be deformed.

Thus, by prolonging appropriately the exposure to the laser beam it is possible to provide, indeed by melting, the surface hollow and obtain the consequent desired increase in the surface roughness of the face of the polymeric sheet 1.

It should be noted, moreover, that an accumulation of melted polymeric material that protrudes outward from the face (and therefore can be detected also to the touch) occurs along the edges of the surface hollow. This accumulation constitutes in practice a ridge, which conveniently helps to avoid the danger of mutual adhesion since it increases further surface roughness.

Conveniently, and with further reference to this first embodiment of the method according to the invention, said method entails, in a step b. that precedes step a., defining, by means of a unit for controlling and managing at least one emission source 2 of the laser beam, a desired plurality of surface hollows having a predefined depth (and corresponding ridges) located for example along the face according to an ordered distribution.

Thus, after setting on the control and management unit (a controller or a computer, for example, provided with an adapted interface) the distribution that one wishes to obtain, step a. can be repeated automatically by said unit to provide several surface hollows (and ridges) until indeed the plurality of surface hollows is obtained on the sheet 1 (on one or both faces).

As shown by the accompanying figure, therefore, in the first embodiment described above the method according to the invention can be provided by resorting to a processing station 3 that is affected by at least one source 2.

In order to allow the processing of the sheets 1, at at least the emission source 2, the station 3 can be provided with a feed line 4, which is capable of moving sequentially said sheets 1, or in any case with means for loading and unloading them, in order to place them at the source 2.

Furthermore, as can be seen from the accompanying figure 1, the station 3 can be provided with a table 5, to which the feed line 4 can lead and on which the sheets 1 can slide, whereas at least one source 2, supported by a frame 6, acts in an upward region.

It should be noted that the specific emission source 2 (optionally also of a commercial type), as well as the corresponding operating parameters, can be selected freely without abandoning the protective scope claimed herein in view of the specific result that one wishes to obtain, described earlier.

For example, the source 2 (with a power level at will, but preferably selected between 300 W, 500 W and 750 W) can be of the CO₂ type and can operate at a wavelength comprised between 8 µm and 12 µm.

Moreover, it is not excluded to resort to two emission sources 2 that operate simultaneously (optionally controlled and actuated by the same unit) in order to reduce the time required for the execution of the selected iterations of step a.

In practice, therefore, in the first embodiment the user can set (and optionally store) in the control and management unit a specific distribution of hollows: the interface of the unit and/or the unit itself can be provided for this purpose with the software and the tools required to facilitate the task of the user.

After setting the desired distribution (or after retrieving from the memory of the unit a previously loaded distribution), the user can control, by means of the unit, the starting of the iterations of step a., during which the source 2 (indeed controlled by the controller or by the computer) moves automatically with respect to each other the sheet 1 and the emission source 2 of the laser beam, so as to direct said beam toward the surface portions to be deformed by melting, until the desired hollows (and consequent ridges) are provided.

It should be noted, moreover, that in the last embodiment proposed above, the (laterally adjacent) sources 2 are capable of moving along an advancement direction that is transverse to the advancement direction of the sheet 1, and that indeed while they moved transversely to the sheet, which in turn advances, the sheet 1 is struck by the laser beam (although different methods of mutual movement, which are in any case within the protective scope claimed herein, are not excluded).

Of course, the sequence of iterations of step a. required to provide the desired distribution of surface hollows on a face, can be repeated conveniently for the other face, and also for all the other sheets 1, if any, to be treated with the method according to the invention.

In a second embodiment of the method according to the invention, step a. consists in rolling, on at least part of the at least one face of the sheet 1, a roller provided with at least one surface protrusion.

When the protrusion is pressed against the face of the sheet 1, during rolling, it is thus possible to achieve the plastic deformation of at least one surface portion and the consequent formation of a surface hollow, such as a groove, a cavity, a recess, and the like.

In particular, the roller (preferably made of metal, although the possibility to resort to other materials, for example of the ceramic type, is not excluded), is provided with a plurality of protrusions, which are shaped appropriately and distributed along its lateral surface, in order to provide a plurality of surface hollows having a predefined depth, which are a consequence of the plastic deformation of respective surface portions of the at least one face affected by the roller.

Conveniently, in order to facilitate the subsequent plastic deformation of the face of the sheet 1, in the second embodiment presented earlier, the method according to the invention provides, in a step c. that precedes step a., for preheating the roller.

It should be noted that the method according to the invention, in the second embodiment described earlier, can be performed by an apparatus provided with means for the rotary support of the roller (optionally with the possibility to replace the roller if one wishes to vary the distribution of hollows than one wishes to obtain on the sheets 1).

The apparatus (described here merely by way of nonlimiting example) comprises furthermore a line for moving the sheets 1, along which the roller acts: during rotation about its own axis, and indeed by way of the selected placement of the line, the roller rolls with its lateral surface, provided with the protrusions, on one face of the sheet 1, so as to provide the selected plastic deformations.

In a third embodiment of the method according to the invention (which does not exhaust the possible embodiments that are in any case within the protective scope claimed herein), step a. consists in striking at least one face of the sheet 1 with a hammer, which is optionally contoured. In this manner, the blow imparted by the hammer (which is optionally heated) causes the desired plastic deformation of at least one surface portion, consequently forming a surface hollow such as a groove, a cavity, a recess, and the like.

In this third embodiment also, there is obviously the possibility to repeat step a. (on one or both faces of the sheet 1) until the desired roughness is obtained.

Moreover, it is useful to note that an accumulation of melted polymeric material, of the type described in relation to the use of the laser beam, occurs also due to plastic deformation (and the generated localized heating), be it obtained by means of the roller or by means of the hammer, along the edges of the surface hollow that is produced.

Therefore, also as a consequence of the plastic deformation it is possible to detect the presence of one or more ridges, which in turn help to avoid the danger of mutual adhesion.

All the embodiments described in the preceding paragraphs therefore allow, according to different techniques, to increase and control the roughness of one face (or of both faces) of a polymeric sheet 1, obtaining the possibility to reduce or eliminate completely the risk of adhesion between stacked sheets 1, as already shown.

As mentioned in the preceding pages, the present description also claims protection for polymeric sheets 1, of the type already indicated in the preceding pages. The polymeric sheets 1 (of the compact or multiwall type), intended for any application, are therefore preferably of the type with a polyolefin matrix (and contain at least one between polypropylene and polyethylene, in percentages that can vary at will), although polymeric sheets 1 of a different type are also within the protective scope claimed herein.

According to the invention, the polymeric sheet 1 therefore comprises at least one artificially deformed surface portion, such as to increase the surface roughness of the face provided with said portion.

In particular, said deformed surface portion is constituted substantially by a surface hollow, such as a groove, a cavity, a recess and the like.

Even more particularly, in a constructive solution of considerable practical interest, which is mentioned by way of nonlimiting example of the application of the invention, the sheet 1 comprises, on at least one face or on both, a plurality of surface hollows having a predefined depth, optionally arranged according to an ordered distribution.

Conveniently, in a first embodiment, each surface hollow of the sheet 1 is obtained by localized melting, provided by means of a respective laser beam, of the surface portion to be deformed. Therefore, in this embodiment the polymeric sheet 1 according to the invention can be obtained by following the first embodiment of the method according to the invention (and/or by resorting to the station 3 shown in the accompanying figure).

As already shown, melted material can furthermore accumulate at the edges of the hollow and form protruding ridges, which conveniently increase surface roughness.

In a second embodiment, each surface hollow can be obtained by plastic deformation of the respective surface portion to be deformed. This deformation can in turn be provided by rolling, on at least part of the face of the sheet 1, a roller provided with at least one surface protrusion.

In practice, therefore, in a manner similar to what has been observed for the first embodiment, the second embodiment of the polymeric sheet 1 according to the invention can be obtained by following the second embodiment of the method according to the invention.

Likewise, in a third embodiment (which does not exhaust the possible embodiments that are in any case within the protective scope claimed herein and can be obtained by following the third embodiment of the method according to the invention), each surface hollow is obtained by plastic deformation of the respective surface portion to be deformed, obtained as a consequence of the blow received by a hammer, which is optionally contoured (and heated).

In the second and third embodiment also, it is stressed that melted material can accumulate at the edges of the hollow, forming protruding ridges, which conveniently increase surface roughness.

In any case, whatever method is selected to obtain one or more surface hollows on one or both faces of the polymeric sheet 1 according to the invention, the surface roughness thus increased avoids the danger that mutual adhesion of stacked sheets 1 occurs due to suction effect or due to an electrostatic effect.

Therefore, by performing the method according to the invention and/or resorting to the polymeric sheets 1 according to the invention it is possible to reduce or eliminate the risks of downtimes or jamming of the automatic machine that is intended to pick up the individual polymeric sheets 1 (to subject them to additional treatments or to make them available to the end user).

In practice it has been found that the method and the sheet according to the invention achieve fully the intended aim, since the deformation of at least one surface portion of at least one face of at least one polymeric sheet in order to increase the surface roughness of said face allows to obtain polymeric sheets for which the danger of mutual adhesion is contained or avoided.

The invention thus conceived is susceptible of numerous modifications and variations, all of which are within the scope of the appended claims; all the details may further be replaced with other technically equivalent elements.

In the examples of embodiment shown, individual characteristics, given in relation to specific examples, may actually be interchanged with other different characteristics that exist in other examples of embodiment.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for processing polymeric sheets, preferably with a polyolefin matrix, **characterized in that** it provides, in a step a., for the deformation of at least one surface portion of at least one face of at least one polymeric sheet (1) in order to increase the surface roughness of the face.

2. The method according to claim 1, **characterized in that** said step a. entails providing, at the surface portion to be deformed, at least one surface hollow, such as a groove, a cavity, a recess and the like.

3. The method according to one or more of the preceding claims, **characterized in that** it provides for repeating said step a., varying at each iteration the corresponding deformed surface portion, for the optimum increase and control of the surface roughness of the face.

4. The method according to one or more of the preceding claims, **characterized in that** it entails providing, in each iteration of said step a. and at each respective surface portion to be deformed, a respective surface hollow, such as a groove, a cavity, a recess and the like, to provide a plurality of surface hollows having a predefined depth.

5. The method according to one or more of the preceding claims, **characterized in that** said step a. consists in striking the face of the polymeric sheet (1) with a laser beam, for the localized melting of the surface portion to be deformed, until the surface hollow is provided, and the surface roughness of the face consequently increases.

6. The method according to one or more of the preceding claims, **characterized in that** it provides, in a step b. that precedes said step a., for forming, by means of a unit for the control and management of at least one laser beam emission source (2), a desired plurality of surface hollows having a predefined depth, said step a. being repeated automatically by said control and management unit until the plurality of surface hollows is obtained.

7. The method according to one or more of claims 1 to 4 and as an alternative to claim 5, **characterized in that** said step a. consists in rolling, on at least part of the at least one face of the sheet (1), a roller provided with at least one surface protrusion for the plastic deformation of the at least one surface portion and the consequent formation of a surface hollow, such as a groove, a cavity, a recess and the like.

8. The method according to claim 7, **characterized in that** said roller is provided with a plurality of protrusions, which are conveniently shaped and distributed along its lateral surface, to provide a plurality of surface hollows having a predefined depth, which are a consequence of the plastic deformation of respective surface portions of the at least one face affected by the roller.

9. The method according to claim 7, **characterized in that** it provides, in a step c. that precedes said step a., for preheating the roller in order to facilitate the subsequent plastic deformation of the face of the sheet (1).

10. The method according to one or more of claims 1 to 4 and as an alternative to claims 5 and 7, **characterized in that** said step a. consists in striking at least one face of the sheet (1) with a hammer, which is optionally contoured, for the plastic deformation of the at least one surface portion and the consequent formation of a surface hollow, such as a groove, a cavity, a recess and the like.

11. A polymeric sheet, preferably having a polyolefin matrix, **characterized in that** it comprises at least one artificially deformed surface portion in order to increase the surface roughness of at least one face provided with said portion.

12. The polymeric sheet according to claim 11, **characterized in that** said at least one deformed surface portion is constituted substantially by a surface hollow, such as a groove, a cavity, a recess, and the like.

13. The polymeric sheet according to one or more of claims 11 and 12, **characterized in that** it comprises, on at least one face, a plurality of said surface hollows having a predefined depth.

14. The polymeric sheet according to claim 12, **characterized in that** said at least one surface hollow is obtained by localized melting, provided by means of a respective laser beam, of the surface portion to be deformed.

15. The polymeric sheet according to claim 12 and as an alternative to claim 14, **characterized in that** said at least one surface hollow is obtained by plastic deformation of the at least one surface portion to be deformed, provided by rolling, on at least part of said at least one face, a roller provided with at least one surface protrusion.

16. The polymeric sheet according to claim 12 and as an alternative to claims 14 and 15, **characterized in that** said at least one surface hollow is obtained by plastic deformation of the at least one surface portion to be deformed, obtained as a consequence of the blow received from an optionally contoured hammer.
